# EUROPÄISCHE PATENTANMELDUNG

(11) **EP 0 526 684 A2**
(43) Veröffentlichungstag der Anmeldung: **10.02.1993**
(21) Anmeldenummer: 92100730.8
(22) Anmeldetag: 17.01.1992
(51) Int. Cl.: H01M 2/02, H01M 2/30, H01M 2/10, H01R 4/02, G04C 10/00

(54) **Lithium-Jod-Batterie**

(30) Priorität: 07.08.1991 DE 9109776 U
(71) Anmelder: Junghans Uhren GmbH, 78713 Schramberg (DE)
(72) Erfinder: Behm, Helmut, Dr. Dipl.-Chem., W-3054 Apelern (DE)
(74) Vertreter: König, Norbert, Dipl.-Phys. Dr.

(57) **Zusammenfassung**

Eine Lithium-Jod-Batterie für Uhren weist ein Batteriegehäuse (2) auf, das gleichzeitig als Uhrenboden ausgebildet ist. Das Batteriegehäuse ist mit einem elektrisch gegenüber dem Batteriegehäuse isolierten Kontakt (8, 16) für die Stromversorgung des Uhrwerks ausgestattet. Mit diesem Kontakt ist ein elektrischer Leiter (4) verbunden, der isoliert aus dem Batteriegehäuse (2) herausgeführt ist.

## Beschreibung

Die Erfindung betrifft eine Lithium-Jod-Batterie gemäß Oberbegriff des Anspruchs 1.

Aufgabe der Erfindung ist es, die Verwendung einer Lithium-Jod-Batterie für Uhren zu vereinfachen.

Diese Aufgabe wird durch die Ausbildung gemäß Kennzeichen des Anspruchs 1 gelöst.

Die erfindungsgemäße Aufgabenlösung zeichnet sich dadurch aus, daß das Batteriegehäuse der Lithium-Jod-Batterie als Uhrenboden ausgebildet ist und somit unmittelbar mit dem Uhrengehäuse verbunden werden kann. Eine solche Ausbildung ist vorteilhaft, insbesondere wegen der Langlebigkeit der Lithium-Jod-Batterien.

Vorteilhafte und zweckmäßige Weiterbildungen der erfindugsgemäßen Aufgabenlösung sind in den Unteransprüchen gekennzeichnet.

Die Erfindung soll nachfolgend anhand der beigefügten Zeichnung näher erläutert werden.

Es zeigt:
Fig. 1 schematisch den Aufbau eines erfindungsgemäß als Uhrenboden ausgebildeten Lithium-Jod-Batteriegehäuses im Schnitt und
Fig. 2 bis 4 verschiedene Ausführungsformen von Batteriegehäusen.

Gleiche Bauteile der in den Figuren dargestellten Ausführungsformen sind mit den gleichen Bezugszeichen versehen.

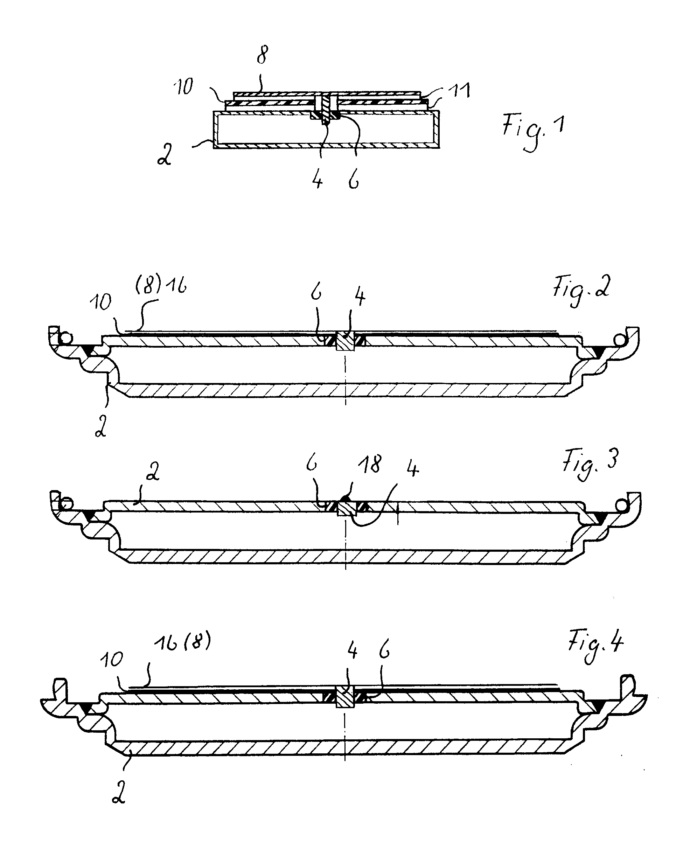

Die Fig. 1 der Zeichnung zeigt schematisch ein Batteriegehäuse 2 einer Lithium-Jod-Batterie für eine Uhr. Das Batteriegehäuse kann aus Edelstahl oder auch einem anderen Material bestehen.

Aus dem Batteriegehäuse führt uhrwerkseitig - also oberseitig - ein elektrischer Leiter 4 heraus, der in einem im Batteriegehäuse angeordneten Glasisolator (Glasdurchführung) 6 oder vergleichbaren Isolator eingeschmolzen ist. Die Stromabnahme für das Uhrwerk (nicht dargestellt) kann direkt über den Leiter 4 bzw. einen Drahtkontakt erfolgen. Die Stromabnahme kann ferner über eine Metallfolie 8 als Kontaktfläche erfolgen, die mit dem elektrischen Leiter 4 elektrisch verbunden ist, beispielsweise durch Schweißen, Löten oder mit Hilfe eines elektrisch leitenden Klebers, wobei zwischen der Metallfolie 8 und dem Batteriegehäuse 2 eine Isolierfolie 10 angeordnet ist, die mit dem Batteriegehäuse und der Metallfolie verklebt (Kleber 11) ist.

Auf die Metallfolie drückt beispielsweise ein Federkontakt (nicht dargestellt) des Uhrwerks, so daß die Kontaktierung über die Kontaktfläche und den Gehäuseschluß erfolgt.

Das Batteriegehäuse 2 ist als Uhrenboden ausgebildet, wie dies in den Fig. 2 bis 4 dargestellt ist. Die üblichen Befestigungsmöglichkeiten des als Uhrenboden ausgebildeten Batteriegehäuses 2 mit dem Uhrengehäuse sind für das Batteriegehäuse in den Fig. 2 bis 4 dargestellt.

Die Fig. 2 und 3 zeigen die Ausbildung des Batteriegehäuses für Außendruckanschluß und die Fig. 4 für Innendruckanschluß.

Das Batteriegehäuse selbst ist hermetisch verschweißt.

Bei den Ausführungsformen nach den Fig. 2 und 4 dient eine Metallfolie 16 und bei der Ausführungsform nach Fig. 3 ein zentraler Drahtanschluß 18 als elektrischer Kontakt zur Stromversorgung des Uhrwerks.

Bei den dargestellten Ausführungsformen ist die Glasdurchführung 6 zentral vorgesehen. Die Metallfolie als Kontaktfläche ermöglicht die Stromabnahme außerhalb des Zentrums an beliebiger Stelle der Metallfolie.

Die komplette Uhrenmontage mit dem beschriebenen Batteriegehäuse-Uhrenboden unterscheidet sich grundsätzlich nicht von der herkömmlichen Montage bei mechanischen Uhrwerken und Quarzuhrwerken.

Der besondere Vorteil der beschriebenen Ausbildung der Lithium-Jod-Batterie besteht darin, daß die Batterie gleichzeitig die Funktion eines Uhrenbodens und die Funktion der Stromversorgung des Uhrwerks übernimmt; eine zusäzliche Lötverbindung zur Herstellung eines elektrischen Kontaktes zwischen Batterie und Uhrwerk ist nicht notwendig. Die Kontaktierung erfolgt einfach über die in der Regel vorhandene Kontaktfeder des Uhrwerks.

## Patentansprüche

1. Lithium-Jod-Batterie für Uhren, dadurch gekennzeichnet, daß die Lithium-Jod-Batterie ein gleichzeitig als Uhrenboden ausgebildetes Batteriegehäuse (2) aufweist, das uhrwerksseitig mit einem elektrisch gegenüber dem Batteriegehäuse isolierten Kontakt (8, 16, 18) für die Stromversorgung des Uhrwerks ausgestattet ist.

2. Lithium-Jod-Batterie nach Anspruch 1, dadurch gekennzeichnet, daß aus dem Batteriegehäuse (2) ein elektrischer Leiter (4) isoliert herausgeführt ist, der mit dem elektrischen Kontakt verbunden ist.

3. Lithium-Jod-Batterie nach Anspruch 1 oder 2, dadurch gekennzeichnet, daß der elektrische Kontakt ein Drahtanschluß (18) oder eine Metallfolie (8, 16) ist, der bzw. die gegenüber dem Batteriegehäuse (2) elektrisch isoliert ist.

4. Lithium-Jod-Batterie nach Anspruch 3, dadurch gekennzeichnet, daß zur Isolation zwischen Metallfolie (8, 16) und Batteriegehäuse (2) eine Isolierfolie (10) angeordnet ist.

5. Lithium-Jod-Batterie nach Anspruch 4, dadurch gekennzeichnet, daß die Isolierfolie (10) mit dem Batteriegehäuse und der Metallfolie verklebt (11) ist.

6. Lithium-Jod-Batterie nach einem der vorherigen Ansprüche, dadurch gekennzeichnet, daß der elektrische Leiter (4) der Batterie mit dem elektrischen Kontakt (8, 16, 18) durch Schweißen, durch Löten oder mit Hilfe eines elektrisch leitenden Klebers verbunden ist.

7. Lithium-Jod-Batterie nach einem der vorherigen Ansprüche, dadurch gekennzeichnet, daß der elektrische Leiter in einem im Batteriegehäuse eingesetzten Isolator aus Glas (Glasdurchführung) eingeschmolzen ist.
